# EUROPEAN PATENT APPLICATION

(11) **EP 4 072 121 A1**
(43) Date of publication of application: **12.10.2022**
(21) Application number: 20911024.6
(22) Date of filing: 23.12.2020
(51) Int. Cl.: H04N 5/232

(54) **PHOTOGRAPHING METHOD AND APPARATUS, STORAGE MEDIUM, AND ELECTRONIC DEVICE**

(30) Priority: 31.12.2019 CN 201911414956
(71) Applicant: GUANGDONG OPPO MOBILE TELECOMMUNICATIONS CORP., LTD., Dongguan, Guangdong 523860 (CN)
(72) Inventor: WU, Jiatao, Dongguan, Guangdong 523860 (CN)
(74) Representative: Penza, Giancarlo
(86) International application number: PCT/CN2020/138616
(87) International publication number: WO 2021/136035

(57) **Abstract**

Disclosed are a photographing method and apparatus, a storage medium, and an electronic device. The method comprises: acquiring first state information, in a photographic scene, of each object in the photographic scene, and second state information of the object in a first template image; if the first state information does not match the second state information, generating and outputting first prompt information; and when real-time state information of each object matches the second state information, photographing the photographic scene to obtain a first image.

## Description

### CROSS-REFERENCE TO RELATED APPLICATIONS

The present disclosure claims priority to a Chinese patent application No. 201911414956.5, filed to China National Intellectual Property Administration (CNIPA) on December 31, 2019, and entitled "PHOTOGRAPHING METHOD AND APPARATUS, STORAGE MEDIUM AND ELECTRONIC DEVICE", the content of which is hereby incorporated by reference in its entirety.

### TECHNICAL FIELD

The present disclosure relates to the field of electronic technologies, and in particularly to a photographing method, a photographing apparatus, a storage medium, and an electronic device.

### DESCRIPTION OF RELATED ART

With the continuous development of electronic devices, pixels of cameras of the electronic devices such as smart phones are getting higher and higher, making more and more users tend to use the electronic devices such as the smart phones to take pictures. Major electronic device manufacturers perform constantly updating and upgrading on hardware of electronic devices to improve the pixels of the cameras of the electronic devices, in order to meet the photographing requirements of the users. However, for taking high-quality pictures, not only the electronic devices are required to have high resolution of cameras, but also the users should have certain professional photography skills, such as reasonable use of composition.

### SUMMARY

Embodiments of the present disclosure provide a photographing method, a photographing apparatus, a storage medium and an electronic device, through which quality of taken photos can be improved.

In a first aspect, an embodiment of the present disclosure provides a photographing method, which includes: acquiring objects in a photographic scene by performing coarse-grained identification of the objects in the photographic scene; acquiring a first template image corresponding to the photographic scene; acquiring first state information of each type of object in the photographic scene, and acquiring second state information of the each type of object in the first template image; generating and outputting, in response to the first state information not matching with the second state information, first prompt information for prompting adjustment of posture of an electronic device; and photographing the photographic scene in response to real-time state information of the each type of object in the photographic scene matching with the second state information of the each type of object, and acquiring a first image.

In a second aspect, an embodiment of the present disclosure provides a photographing apparatus, which includes: an identification module, used to acquire objects in a photographic scene by performing coarse-grained identification of the objects in the photographic scene, each of the objects corresponding to a type; a first acquiring module, used to acquire a first template image corresponding to the photographic scene; a second acquiring module, used to acquire first state information of each type of object in the photographic scene, and acquire second state information of the each type of object in the first template image; a generation module, used to generate and output, in response to the first state information not matching with the second state information, first prompt information for prompting adjustment of posture of an electronic device; and a photographing module, used to photograph the photographic scene in response to real-time state information of the each type of object in the photographic scene matching with the second state information of the each type of object, and acquire a first image.

In a third aspect, an embodiment of the present disclosure provides a storage medium having a computer program stored therein, and the computer program is configured to cause, when being executed by a computer, the computer to implement a process of the photographing method provided according to the embodiment of the present disclosure.

In a fourth aspect, an embodiment of the present disclosure provides an electronic device, including a processor and a memory, where the memory is stored with a computer program, and the processor is configured to, by calling the computer program stored in the memory, implement a process of the photographing method provided according to the embodiment of the present disclosure.

### BRIEF DESCRIPTION OF DRAWINGS

Technical solutions of the present disclosure and beneficial effects thereof will be made apparent by the following detailed description of specific embodiments of the present disclosure, in combination with accompanying drawings.
FIG. 1 illustrates a first schematic flowchart of a photographing method according to an embodiment of the present disclosure.
FIG. 2 illustrates a second schematic flowchart of a photographing method according to an embodiment of the present disclosure.
FIG. 3 illustrates a schematic view of a preview image G1 according to an embodiment of the present disclosure.
FIG. 4 illustrates a schematic view of a first template image M1 according to an embodiment of the present disclosure.
FIG. 5 illustrates a schematic view of a target image G2 according to an embodiment of the present disclosure.
FIG. 6 illustrates a schematic structural view of a photographing apparatus according to an embodiment of the present disclosure.
FIG. 7 illustrates a first schematic structural view of the photographing apparatus according to an embodiment of the present disclosure.
FIG. 8 illustrates a second schematic structural view of the photographing apparatus according to an embodiment of the present disclosure.
FIG. 9 illustrates a schematic structural view of an image processing circuit according to an embodiment of the present disclosure.

### DETAILED DESCRIPTION OF EMBODIMENTS

Referring to the accompanying drawings, the same component symbols represent the same components, principles of the present disclosure are illustrated by example as implemented in an appropriate computing environment. The following description is based on specific embodiments of the present disclosure exemplified, but it should not be considered that other specific embodiments of the present disclosure not detailed herein are not contained therein.

A photographing method is provided according to an embodiment of the present disclosure, which includes:
acquiring objects in a photographic scene by performing coarse-grained identification of the objects in the photographic scene;
acquiring a first template image corresponding to the photographic scene;
acquiring first state information of each type of object in the photographic scene, and acquiring second state information of the each type of object in the first template image;
generating and outputting, in response to the first state information not matching with the second state information, first prompt information for prompting adjustment of posture of an electronic device; and
photographing the photographic scene in response to real-time state information of the each type of object in the photographic scene matching with the second state information of the each type of object, and acquiring a first image.

In an embodiment, the first state information is a first proportion, and the second state information is a second proportion;
the acquiring first state information of each type of object in the photographic scene includes:
   acquiring a preview image of the photographic scene; and
   acquiring the first proportion of an area of the each type of object to an area of the preview image;
the acquiring second state information of the each type of object in the first template image includes:
   acquiring the second proportion of an area of the each type of object to an area of the first template image;
   the first state information not matching with the second state information includes: a difference between the first proportion and the second proportion being not within a predetermined first difference range; and
   the real-time state information of the each type of object in the photographic scene matching with the second state information of the each type of object includes: a difference between a proportion of an area of the each type of object to an area of a real-time preview image and the second proportion within the predetermined first difference range.

In an embodiment, the generating and outputting first prompt information for prompting adjustment of posture of an electronic device specifically includes:
determining a target object, where a type of the target object corresponds to the difference between the first proportion and the second proportion being not within the predetermined first difference range;
determining, in response to the first proportion corresponding to the target object being greater than the second proportion corresponding to the target object, a direction of decreasing the first proportion corresponding to the target object as a first movement direction of the electronic device;
determining, in response to the first proportion corresponding to the target object being smaller than the second proportion corresponding to the target object, a direction of increasing the first proportion corresponding to the target object as the first movement direction of the electronic device; and
generating and outputting, based on the first movement direction, the first prompt information for prompting adjustment of posture of the electronic device.

In an embodiment, the photographing method further includes:
in response to the difference between the first proportion and the second proportion being within the predetermined first difference range, acquiring a first center-of-gravity coordinate of the each type of object in the preview image and acquiring a second center-of-gravity coordinate of the each type of object in the first template image, where the first center-of-gravity coordinate includes a first horizontal coordinate and a first vertical coordinate, and the second center-of-gravity coordinate includes a second horizontal coordinate and a second vertical coordinate;
generating and outputting, in response to one of a difference between the first horizontal coordinate and the second horizontal coordinate being not within a predetermined second difference range and a difference between the first vertical coordinate and the second vertical coordinate being not within a predetermined third difference range, second prompt information for prompting adjustment of posture of the electronic device; and
photographing the photographic scene, in response to a difference between a horizontal coordinate of a center-of-gravity coordinate of the each type of object in the real-time preview image and the second horizontal coordinate being within the predetermined second difference range and a difference between a vertical coordinate of the center-of-gravity coordinate of the each type of object in the real-time preview image and the second vertical coordinate being within the predetermined third difference range, and acquiring a second image.

In an embodiment, the generating and outputting second prompt information for prompting adjustment of posture of the electronic device includes:
displaying a circular area corresponding to the each type of object, with the center-of-gravity coordinate of the each type of object in the first template image as a center of circle and a predetermined threshold as a radius, where the predetermined threshold is determined based on the predetermined second difference range and the predetermined third difference range;
determining, based on the circular area, a second movement direction of the electronic device; and
generating and outputting, based on the second movement direction, the second prompt information for prompting adjustment of posture of the electronic device.

In an embodiment, the photographing method further includes:
before the acquiring objects in a photographic scene by performing coarse-grained identification of the objects in the photographic scene,
determining a type of the photographic scene; and
performing, in response to the type being a first type, the coarse-grained identification of the objects in the photographic scene, and acquiring the objects in the photographic scene.

In an embodiment, the photographing method further includes:
performing, in response to the type being a second type, fine-grained identification of the objects in the photographic scene, and acquiring the objects in the photographic scene;
acquiring a second template image corresponding to the photographic scene;
acquiring third state information of each type of object in the photographic scene, and acquiring fourth state information of the each type of object in the second template image; and
generating and outputting, in response to the third state information not matching with the fourth state information, prompt information for prompting adjustment of posture of the in the photographic scene, to make the real-time state information of the each type of object in the photographic scene match with the fourth state information.

In an embodiment, the acquiring a first template image corresponding to the photographic scene includes:
acquiring a preview image of the photographic scene;
acquiring a multiple template images;
determining a quantity of same types of objects in the preview image and each of the multiple template images; and
determining one of the multiple template images which corresponds to the largest quantity of same types of objects as the first template image corresponding to the photographic scene.

It can be appreciated that an implementation subject of embodiments of the present disclosure may be an electronic device such as a smartphone or a tablet computer.

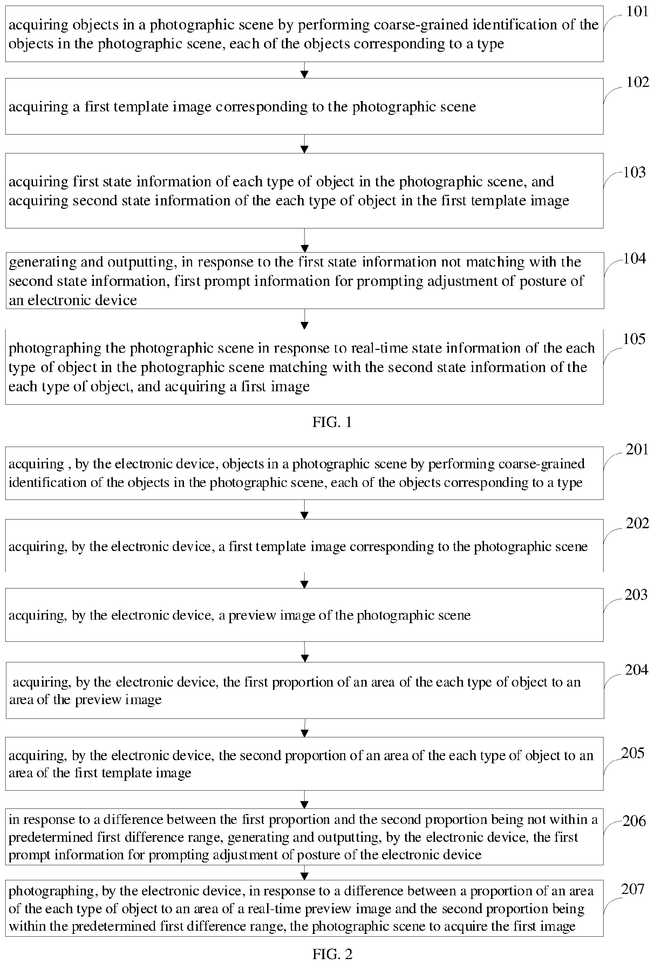

Referring to FIG. 1, FIG. 1 illustrates a first schematic flowchart of a photographing method according to an embodiment of the present disclosure, and the flowchart may begin from block 101 to block 105.

In block 101, objects in a photographic scene are acquired by performing coarse-grained identification of the objects in the photographic scene, each of the objects corresponding to a type.

Specifically, after the electronic device launches a photographing application (e.g., a system application "camera application" of the electronic device) according to an operation of a user, a scene that the camera is aimed to is a photographic scene. For example, after the "camera application" is launched by tapping an icon of the "camera application" on the electronic device with a finger of the user, if the user uses the camera of the electronic device to aim to a scene, the scene is a photographic scene. According to the above description, it should be understood by the skilled in the art that the photographic scene does not refer to a specific scene, but to a scene aimed by the camera in real time based on a pointing direction of the camera varies.

In the embodiments of the present disclosure, the electronic device first performs coarse-grained identification of objects in the photographic scene to acquire the objects in the photographic scene. Specifically, performing the coarse-grained identification of the objects in the photographic scene is for identifying the types of the objects, and a particular instance of an object is not considered.

For example, assuming that multiple persons and multiple bicycles in the photographic scene, when the coarse-grained identification of objects in the photographic scene is performed, the electronic devices can identify multiple persons as a type of object and identify multiple bicycles as another type of object.

In block 102, a first template image corresponding to the photographic scene is acquired.

For example, multiple template images may be preset in the electronic device. The template images may be associated with the objects in the photographic scene, for example, the template images may include pure portrait template images, portrait landscape template images, pure landscape template images, seascape template images, animal landscape template images, pure animal template images, urban architecture template images, and the like. It should be understood that a quantity of a type of template image may be one or more, for example, multiple different seascape template images may be preset in the electronic device, and in practical applications, other template images may be also preset in the electronic device, which is not limited herein.

For another example, the electronic device may acquire an image stored in the electronic device (e.g., a photograph taken by the user or a picture downloaded from the Internet); subsequently, the electronic device may identify objects in the image to identify the objects in the image; then, the electronic device may determine a type of each image based on the identified objects to acquire multiple types; and finally, the electronic device may preset template images based on a quantity of images corresponding to the multiple types.

For example, assuming that there are 20 images stored in the electronic device, 10 images belong to a type of seascape, 5 images therein belong to a type of portrait landscape, 3 images therein belong to a type of animal landscape, 1 image belongs to a type of urban architecture, and 1 image belongs to a type of pure landscape. Then, the electronic device can preset template images according to a category that corresponds images a quantity of which is greater than 2. For example, a seascape template image, a portrait landscape template image, and an animal landscape template image can be preset in the electronic device. It should be understood that since a quantity of images belonging to the type of seascape is greater than a quantity of images belonging to the type of portrait landscape, and a quantity of images belonging to the type of portrait landscape is greater than a quantity of images belonging to the type of animal landscape, it can be determined that the user prefers the images belonging to the type of seascape, so that a quantity of the seascape template images is greater than a quantity of the portrait landscape images, and a quantity of the portrait landscape template images is greater than a quantity of the animal landscape template images when the template images are preset.

It should noted that in the embodiment of the present disclosure, the template image may be a compositionally reasonable template image, i.e., a template image that conforms to certain aesthetic rules, associated with the photographed objects. For example, for the portrait landscape template image, a display property of the portrait landscape template image can be set to conform to certain aesthetic rules, such as displaying a face or a head in the template image in an area near a golden proportion division point of a display interface of the electronic device, or displaying the face or head in the template image in a lower right corner area of the display interface of the electronic device, etc. For another example, in the seascape template image, a display property of the seascape template image can also be set to conform to certain aesthetic rules, such as displaying a coastline in the seascape template image near a lower third of the display interface of the electronic device, etc.

In the embodiment of the present disclosure, the electronic device may provide a template image selection interface after the electronic device launches a photographing application according to the operation of the user. All of the above template images, such as portrait landscape template images, seascape template images, and the like, may be displayed on the template image selection interface. The user can select a corresponding template image from all the template images displayed in the template image selection interface. The electronic device may acquire a template image selected by the user as a first template image corresponding to the photographic scene.

To prevent the user from randomly selecting a template image not correspond to a current photographic scene, e.g., a preview image of the current photographic scene is a portrait landscape image, but the user selects an urban architecture template image, the electronic device may select a corresponding template image from the multiple template images preset by the electronic device based on the object in the photographic scene to be displayed in the template image selection interface, for user to select. For example, objects in the current photographic scene are a person and scenery, then the electronic device can display multiple different portrait landscape template images on the template image selection interface for the user to select. If no template image selection operation is received from the user within a preset time, the electronic device may select any one template image from the multiple different portrait landscape template images as the first template image corresponding to the photographic scene.

In block 103, first state information of each type of object in the photographic scene is acquired, and second state information of the each type of object in the first template image is acquired.

In block 104, in response to the first state information not matching with the second state information, first prompt information for prompting adjustment of posture of the electronic device is generated and outputted.

It should be understood that for each type of object, if the first state information of the object in the photographic scene, that is, corresponding first state information of the object, does not match the second state information of the object in the first template image, that is, corresponding second state information of the object, the electronic device will generate and output prompt information for prompting adjustment of posture of the electronic device, to make real-time state information of each type of object in the photographic scene match with the second state information of the object in the first target image. The prompt information is the first prompt information. That is, in the embodiment of the present disclosure, as long as the first state information corresponding to any one or more of objects in the photographic scene does not match with the second state information corresponding thereto, the electronic device will generate and output prompt information for prompting adjustment of posture of the electronic device. It should be understood that in the process of constantly adjusting the posture of the electronic device, such as moving the electronic device horizontally to the left, a state of the object in the photographic scene will also change constantly, and this constantly changing state is the real-time state information.

For example, assuming that the objects in the photographic scene are "person", "mountain" and "water". Then, the electronic device can acquire first state information of each of "person", "mountain" and "water" in the photographic scene, and second state information of "person", "mountain" and "water" in the first template image. Then, the electronic device can determine whether the first state information corresponding to "person", "mountain" and "water" are all matched with the second state information corresponding to "person", "mountain" and "water". If not matched, the electronic device can generate and output prompt information for prompting adjustment of posture of the electronic device, and the prompt information is the first prompt information. For example, the first prompt information can be: move the electronic device horizontally to the left, to make the real-time state information of "person", "mountain" and "water" in the photographic scene match with the second state information of "person", "mountain" and "water" in the first template image.

For example, the first status information may be a first proportion and the second status information may be a second proportion. For the objects "person", "mountain" and "water", when determining whether the first state information corresponding to "person", "mountain" and "water" correspondingly matches with the second state information corresponding to "person", "mountain" and "water", the electronic device can acquire the preview image of the photographic scene. Then, the electronic device can acquire the first proportion of an area of each of photographic scene to an area of the preview image, and the second proportion of an area of each of photographic scene to an area of the first template image. The electronic device can determine whether a difference between the first proportion corresponding to the "person" and the second proportion corresponding to the "person" is within a preset first difference range. If not, it is determined that the first state information corresponding to the "person" does not match the second state information corresponding to the "person". The electronic device can determine whether a difference between the first proportion corresponding to the "mountain" and the second proportion corresponding to the "mountain" is within the preset first difference range. If not, it is determined that the first state information corresponding to the "mountain" does not match the second state information corresponding to the "mountain". The electronic device can determine whether a difference between the first proportion corresponding to the "water" and the second proportion corresponding to the "water" is within the preset first difference range. If not, it is determined that the first state information corresponding to the "water" does not match the second state information corresponding to the "water".

For another example, the first state information may be a first center-of-gravity coordinate and the second state information may be the second center-of-gravity coordinate. For the objects "person", "mountain" and "water", when determining whether the first state information corresponding to "person", "mountain" and "water" correspondingly matches with the second state information corresponding to "person", "mountain" and "water", the electronic device can acquire the preview image of the photographic scene. Then, the electronic device can acquire the first center-of-gravity coordinate of each of "person", "mountain" and "water" in the preview image, which includes a first horizontal coordinate and a first vertical coordinate, and acquire the second center-of-gravity coordinate of each of "person", "mountain" and "water" in the first template image, which includes a second horizontal coordinate and a second vertical coordinate. The electronic device can determine whether a difference between the first horizontal coordinate corresponding to "person" and the second horizontal coordinate corresponding to "person" is within a preset second difference range, and whether a difference between the first vertical coordinate corresponding to "person" and the second vertical coordinate corresponding to "person" is within a preset third difference range. If not, it is determined that the first state information corresponding to "person" does not match the second state information corresponding to "person". The electronic device can determine whether a difference between the first horizontal coordinate corresponding to "mountain" and the second horizontal coordinate corresponding to "mountain" is within the preset second difference range, and whether a difference between the first vertical coordinate corresponding to "mountain" and the second vertical coordinate corresponding to "mountain" is within the preset third difference range. If not, it is determined that the first state information corresponding to "mountain" does not match the second state information corresponding to "mountain". The electronic device can determine whether a difference between the first horizontal coordinate corresponding to "water" and the second horizontal coordinate corresponding to "water" is within the preset second difference range, and whether a difference between the first vertical coordinate corresponding to "water" and the second vertical coordinate corresponding to "water" is within the preset third difference range. If not, it is determined that the first state information corresponding to "water" does not match the second state information corresponding to "water".

Specifically, the preset first difference range, the preset second difference range, and the preset third difference range can be set according to actual requirements, and are not specifically limited herein.

In block 105, in response to real-time state information of the each type of object in the photographic scene matching with the second state information of the each type of object, the photographic scene is photographed and a first image is acquired.

In the embodiment of the present disclosure, when real-time state information of the each type of object in the photographic scene matches with the second state information of the each type of object in the first template image, the electronic device can photograph the photographic scene, so as to acquire a first image that conforms to certain aesthetic rules, that is, having reasonable composition. Alternatively, when real-time state information of the each type of object in the photographic scene matches with the second state information of the each type of object in the first template image, the electronic device can generate and output prompt information to prompt the user to photograph the photographic scene. Then, a "shoot" button of the electronic device displayed in the photographing application interface to photograph the photographic scene, to acquire the first image with reasonable composition.

It should be understood that when the first state information of the each type of object in the photographic scene matches with the second state information of the each type of object in the first template image, the electronic device can determine that the preview image of the photographic scene has reasonable composition, that is, conforms to certain aesthetic rules. Then, the electronic device can directly photograph the photographic scene to acquire the first image with reasonable composition.

In the embodiment of the present disclosure, through acquiring the first state information of each type of object in the photographic scene and second state information of the each type of object in the first template image with reasonable composition, when the first state information matches with the second state information, it can be confirmed that the preview image of the photographic scene has reasonable composition. When the first state information does not match with the second state information, prompt information for prompting adjustment of posture of the electronic device can be generated and outputted, to make composition of the real-time preview image of the photographic scene be reasonable. Therefore, the composition of the image acquired by photographing the photographic scene is reasonable, and quality of the image can be improved.

Please refer to FIG. 2, FIG. 2 illustrates a second schematic flowchart of a photographing method according to an embodiment of the present disclosure. The flowchart may begin from block 201 to block 207.

In block 201, objects in a photographic scene are acquired by the electronic device by performing coarse-grained identification of the objects in the photographic scene.

In block 202, a first template image corresponding to the photographic scene is acquired by the electronic device.

Blocks 201 and 202 are the same as or corresponding to blocks 101 and 102 described above and will not be repeated herein.

In block 203, a preview image of the photographic scene is acquired by the electronic device.

In block 204, a first proportion of an area of the each type of object to an area of the preview image is acquired by the electronic device.

In block 205, the second proportion of an area of the each type of object to an area of the first template image is acquired by the electronic device.

In block 206, in response to a difference between the first proportion and the second proportion being not within a predetermined first difference range, first prompt information for prompting adjustment of posture of the electronic device is generated and outputted by the electronic device.

In the embodiment of the present disclosure, as long as the difference between the first proportion corresponding to the each type of object in the photographic scene and a corresponding second proportion of the each type of object is not within the preset first difference range, the electronic device will generate and output the first prompt information for prompting adjustment of posture of the electronic device.

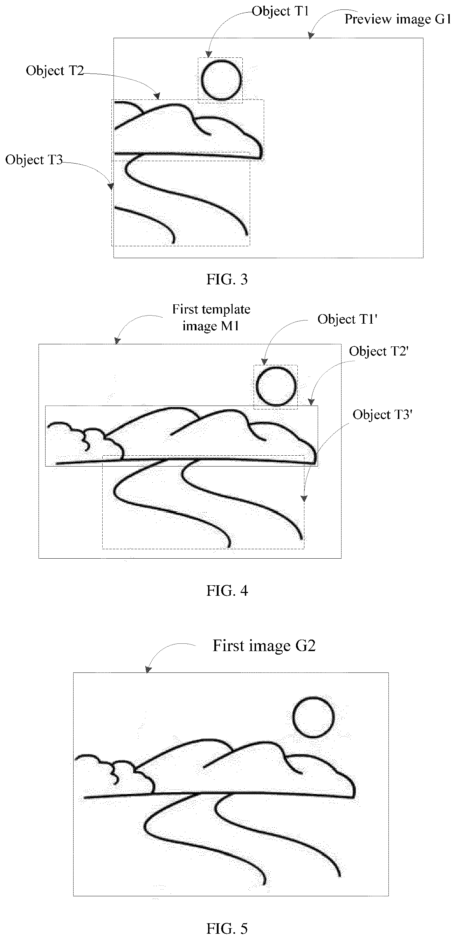

For example, as shown in FIG. 3, FIG. 3 illustrates a schematic view of a preview image G1 of a certain photographic scene acquired by the electronic device. It is assumed that there are three types of objects in the photographic scene, i.e., an object T1, an object T2 and an object T3. It should be understood that there are also three types of objects in the preview image G1 of this photographic scene, i.e., an object T1, an object T2 and an object T3. For the object T1, the electronic device can acquire a first proportion S1 of its area to an area of the preview image G1. Similarly, for the object T2, the electronic device can acquire a first proportion S2 of its area to the area of the preview image G1. For the object T3, the electronic device can acquire a first proportion S3 of its area to the area of the preview image G1.

For example, as shown in FIG. 4, FIG. 4 illustrates a schematic view of a first template image M1 acquired by the electronic device. An area of the first template image M1 is the same as that of the preview image G1. There are three types of objects in the first template image M1, i.e., an object T1', an object T2' and an object T3'. Specifically, the object T1' and the object T1 are the same type of object, for example, the object T1' and the object T1 are both "person"; the object T2' and the object T2 are the same type of object; and the object T3' and the object T3 are the same type of object. For the object T1', the electronic device can acquire a second proportion S4 of its area to the area of the first template image M1. Similarly, for the object T2', the electronic device can acquire a second proportion S5 of its area to the area of the first template image M1. For the object T3', the electronic device can acquire a second proportion S6 of its area to the area of the first template image M1.

Specifically, for the object T1 (T1'), the electronic device may determine whether the difference between the first proportion S1 and the second proportion S4 is within the preset first difference range. Assuming that the first proportion S1 is 1/30, the second proportion S4 is 1/30, and the preset first difference range is [0, 1/9], it can be known that if the difference between the first proportion S1 and the second proportion S4 is 0, it can be determined that the difference between the first proportion S1 and the second proportion S4 is within the preset first difference range.

For the object T2 (T2'), the electronic device may determine whether the difference between the first proportion S2 and the second proportion S5 is within the preset first difference range. Assuming that the first proportion S2 is 1/8, the second proportion S5 is 1/4, and the preset first difference range is [0, 1/9], it can be known that the difference between the first proportion S2 and the second proportion S5 is 1/8, so it can be determined that the difference between the first proportion S2 and the second proportion S5 is not within the preset first difference range.

For the object T3 (T3'), the electronic device may determine whether the difference between the first proportion S3 and the second proportion S6 is within the preset first difference range. Assuming that the first proportion S3 is 1/6, the second proportion S6 is 1/5, and the preset first difference range is [0, 1/9], it can be known that the difference between the first proportion S3 and the second proportion S6 is 1/30, so it can be determined that the difference between the first proportion S3 and the second proportion S6 is within the preset first difference range.

As can be seen from the above, for the object T2 (T2'), if the electronic device determines that the difference between its corresponding first proportion S2 and its corresponding second proportion S5 is not within the preset first difference range, the electronic device can generate and output the first prompt information for prompting adjustment of posture of the electronic device, such as prompting the user to move the electronic device horizontally to the left. During the movement of the electronic device, the electronic device can continuously detect whether the difference between the proportion of each of areas of the objects T1 (T1'), T2 (T2') and T3 (T3') to an area of the real-time preview image and the second proportion of it to the area of the first template image is within the preset first difference range. When it is detected that the difference between the proportion of each of the areas of the objects T1 (T1'), T2 (T2') and T3 (T3') to the area of the real-time preview image and the second proportion of it to the area of the first template image is within the preset first difference range, the electronic device can generate and output prompt information to remind the user that the preview image of the current photographic scene has a reasonable composition and the electronic device can stop moving.

It can be understood that with the movement of the electronic device, the photographic scene of the electronic device is also changing in real time, and the preview image of the photographic scene is also constantly changing. This constantly changing preview image is the real-time preview image.

It can also be understood that the preset first difference range can be set according t oan actual situation, and is not specifically limited herein.

In block 207, in response to a difference between a proportion of an area of the each type of object to an area of a real-time preview image and the second proportion being within the predetermined first difference range, a photographic scene is photographed by the electronic device, and a first image is acquired.

For example, as shown in FIG. 5, when the difference between the proportion of the area of the each type of object to the area of the real-time preview image and the second proportion is within the preset first difference range, the electronic device can photograph the photographic scene to acquire the first image G2. The first image G2 is an image with reasonable composition.

It can be understood that when the difference between the first proportion corresponding to each type of object and the second proportion corresponding to each type of object is within the preset first difference range, the electronic device can determine that the preview image of the photographic scene has reasonable composition, that is, conforms to certain aesthetic rules. Then, the electronic device can directly photograph the photographic scene to acquire the first image with reasonable composition.

In some embodiment, a process of generating and outputting by the electronic device first prompt information for prompting adjustment of posture of the electronic device may include:
determining, by the electronic device, a target object, where a type of the target object corresponds to the difference between the first proportion and the second proportion being not within the predetermined first difference range;
determining, in response to the first proportion corresponding to the target object being greater than the second proportion corresponding to the target object, a direction of decreasing the first proportion corresponding to the target object as a first movement direction of the electronic device determining, in response to the first proportion corresponding to the target object being smaller than the second proportion corresponding to the target object, a direction of increasing the first proportion corresponding to the target object as the first movement direction of the electronic device; and
generating and outputting, by the electronic device, the first prompt information for prompting adjustment of posture of the electronic device based on the first movement direction.

For example, the target object can be the object T2 (T2') in the above description, if the first proportion corresponding to the target object is 1/8, and the second proportion corresponding to the target object is 1/4, then the electronic device can determine that the first proportion corresponding to the target object is smaller than the second proportion corresponding to the target object, thus the electronic device can take a direction of increasing the first proportion corresponding to the target object as the first moving direction of the electronic device, and can generate and output the first prompt information for prompting adjustment of posture of the electronic device based on the first movement direction. Assuming that the electronic device determines that moving the electronic device horizontally to the left can increase the first proportion corresponding to the target object, the first prompt information may be: please move the electronic device horizontally to the left. The user can move the electronic device horizontally to the left to increase the first proportion corresponding to the target object, so that the difference between the proportion of an area of the target object to the area of the real-time preview image and the second proportion of the area of the target object to the area of the first template image is within the preset first difference range, and the difference between the proportion of an area of other type of object to the area of the real-time preview image and the second proportion of the area of other type of object to the area of the first template image is still within the preset first difference range.

For example, when the user moves the electronic device horizontally to the left, the electronic device can continuously detect whether the difference between the proportion of the area of the target object to the area of the real-time preview image and the second proportion of the area of the target object to the area of the first template image is within the preset first difference range, and whether the difference between the proportion of an area of other type of object to the area of the real-time preview image and the second proportion of the area of other type of object to the area of the first template image is within the preset first difference range. When the electronic device detects that the difference between the proportion of the area of the target object to the area of the real-time preview image and the second proportion of the area of the target object to the area of the first template image is within the preset first difference range, and the difference between the proportion of the area of other type of object to the area of the real-time preview image and the second proportion of the area of other type of object to the area of the first template image is within the preset first difference range, the electronic device can generate and output prompt information to prompt the user to stop moving the electronic device.

By analogy, when the first proportion corresponding to the target object is greater than the second proportion corresponding to the target object, the electronic device may take the direction of decreasing the first proportion corresponding to the target object as the first moving direction of the electronic device, and generate and output the first prompt information for prompting adjustment of posture of the electronic device based on the first moving direction. Assuming that the electronic device determines that moving the electronic device horizontally to the right can increase the first proportion corresponding to the target object, the first prompt information may be: please move the electronic device horizontally to the right. The user can move the electronic device horizontally to the right to reduce the first proportion corresponding to the target object, so that the difference between the proportion of the area of the target object to the area of the real-time preview image and the second proportion of the area of the target object to the area of the first template image is within the preset first difference range, and the difference between the proportion of the area of other type of object to the area of the real-time preview image and the second proportion of the area of other type of object to the area of the first template image is still within the preset first difference range.

In other embodiments, when the first proportion corresponding to the target object is greater than the second proportion corresponding to the target object, the first prompt information may be: move the electronic device in the direction of decreasing the first proportion corresponding to the target object. By analyzing an actual scene, the user can determine that moving the electronic device horizontally to the right can reduce the first proportion of the target object. Then, the user can move the electronic device horizontally to the right to reduce the first proportion of the target object, so that the difference between the proportion of the area of the target object to the area of the real-time preview image and the second proportion of the area of the target object to the area of the first template image is within the preset first difference range.

When the first proportion corresponding to the target object is smaller than the second proportion corresponding to the target object, the first prompt information may be: move the electronic device in the direction of increasing the first proportion corresponding to the target object. By analyzing an actual scene, the user can determine that moving the electronic device horizontally to the left can increase the first proportion of the target object. Then, the user can move the electronic device horizontally to the left to increase the first proportion of the target object, so that the difference between the proportion of the area of the target object to the area of the real-time preview image and the second proportion of the area of the target object to the area of the first template image is within the preset first difference range.

It can be understood that the area of other type of object in the photographic scene to the area of the real-time preview image may also increase or decrease when the user moves the electronic device. Therefore, in the process of the user moving the electronic device, while the electronic device detects whether the difference between the proportion of the area of the target object to the area of the real-time preview image and the second proportion of the area of the target object to the area of the first template image is smaller than the preset first difference range, it can also detect whether the difference between the proportion of the area of other type of object to the area of the real-time preview image and the second proportion of other type of object to the area of the first template image is smaller than the preset first difference range. When the difference between the proportion of the area of the target object to the area of the real-time preview image and the second proportion of the area of the target object to the area of the first template image is smaller than the preset first difference range, and the difference between the proportion of the area of other type of object to the real-time preview image and the second proportion of other type of object to the area of the first template image is smaller than the preset first difference range, the electronic device can prompt the user to stop moving the electronic device.

In some embodiment, the photographing method may further include:
in response to the difference between the first proportion and the second proportion being within the predetermined first difference range, acquiring, by the electronic device, a first center-of-gravity coordinate of the each type of object in the preview image and acquiring, by the electronic device a second center-of-gravity coordinate of the each type of object in the first template image, where the first center-of-gravity coordinate includes a first horizontal coordinate and a first vertical coordinate, and the second center-of-gravity coordinate includes a second horizontal coordinate and a second vertical coordinate;
generating and outputting, by the electronic device, in response to one of a difference between the first horizontal coordinate and the second horizontal coordinate being not within a predetermined second difference range and a difference between the first vertical coordinate and the second vertical coordinate being not within a predetermined third difference range, second prompt information for prompting adjustment of posture of the electronic device; and
photographing the photographic scene, by the electronic device, in response to a difference between a horizontal coordinate of a center-of-gravity coordinate of the each type of object in the real-time preview image and the second horizontal coordinate being within the predetermined second difference range and a difference between a vertical coordinate of the center-of-gravity coordinate of the each type of object in the real-time preview image and the second vertical coordinate being within the predetermined third difference range, and acquiring a second image.

To make the quality of the photographed target image better, when the first proportion corresponding to the each type of object matches with the second proportion corresponding to the each type of object, the electronic device may further acquire the first center-of-gravity coordinate of the each type of object in the preview image and the second center-of-gravity coordinate of each type of object in the first template image. The first center-of-gravity coordinate includes a first horizontal coordinate and a first vertical coordinate, and the second center-of-gravity coordinate includes a second horizontal coordinate and a second vertical coordinate. When the first horizontal coordinate corresponding to a type of object and the second horizontal coordinate corresponding to the type of object are not within the preset second difference range, or the first vertical coordinate corresponding to the type of object and the second vertical coordinate corresponding to the type of object are not within the preset second difference range, the electronic device can generate and output the second prompt information for prompting adjustment of posture of the electronic device to prompt the user to adjust the posture of the electronic device, to make a difference between a horizontal coordinate of a center-of-gravity coordinate in the real-time preview image and a second horizontal coordinate of each type of object be within the preset second difference range, and make a difference between a vertical coordinate of the center-of-gravity coordinate in the real-time preview image and a second vertical coordinate of each type of object be within the preset third difference range. When the difference between a horizontal coordinate of the center-of-gravity coordinate in the real-time preview image and the second horizontal coordinate of each type of object being within the preset second difference range and the difference between the vertical coordinate of the center-of-gravity coordinate in the real-time preview image and the second vertical coordinate of each type of object being within the preset third difference range, the electronic device can photograph the photographic scene and acquire the second image.

Specifically, a size of the preview image is the same as that of the first template image. The first center-of-gravity coordinate and the second center-of-gravity coordinate are coordinates in the same plane rectangular coordinate system. For example, the plane rectangular coordinate system can be established based on the coincidence of the preview image and the first template image, with a lower left corner of the preview image or the first template image as an origin, a direction pointing to a lower right corner at the lower left corner is an X-axis direction, and a direction pointing to an upper left corner at the lower left corner is a Y-axis direction.

It can be understood that the preset second difference range and the preset third difference range can be set according to an actual situation, and are not specifically limited herein.

In some embodiments, a process of generating and outputting, by the electronic device, second prompt information for prompting adjustment of posture of the electronic device may include:
displaying, by the electronic device, a circular area corresponding to the each type of object, with the center-of-gravity coordinate of the each type of object in the first template image as a center of circle and a predetermined threshold as a radius, where the predetermined threshold is determined based on the predetermined second difference range and the predetermined third difference range;
determining, by the electronic device, a second movement direction of the electronic device based on the circular area; and
generating and outputting, by the electronic device, the second prompt information for prompting adjustment of posture of the electronic device based on the second direction of movement.

For example, the electronic device may make the first template image appear translucent and overlay on the preview image, and make the size of the first template image equal to that of the preview image. Then, the electronic device can display the circular area corresponding to the each type of object on the first template image with the center-of-gravity coordinate of the each type of object in the first template image as the center of the circle and the preset threshold as the radius. Then, the electronic device can determine the second moving direction of the electronic device based on the circular area corresponding to the each type of object, so that the center-of-gravity coordinate of each type of object in the real-time preview image are within the circular area corresponding to the each type of object after the electronic device moves. The electronic device can generate and output the second prompt information for prompting adjustment of posture of the electronic device based on the second moving direction to prompt the user to adjust the posture of the electronic device. For example, if the electronic device determines that it is required to move the electronic device horizontally to the left, so that the center-of-gravity coordinate of the each type of object in the real-time preview image is in the circular area corresponding to each type of object, then the moving direction of the electronic device determined by the electronic device is a horizontal left direction. The second prompt information is: move the electronic device horizontally to the left.

It can be understood that in the process of horizontally moving the electronic device to the left, the user can determine whether the center-of-gravity coordinate of the each type of object in the real-time preview image is in the circular area corresponding to the each type of object by visual inspection. If so, the user can stop moving the electronic device. Alternatively, in the process that the user horizontally moves the electronic device to the left, the electronic device can continuously detect whether the center-of-gravity coordinate of the each type of object in the real-time preview image is in the circular area corresponding to the each type of object. When the electronic device detects that the center-of-gravity coordinate of the each type of object in the real-time preview image is in the circular area corresponding to the each type of object, the electronic device can generate and output prompt information to prompt the user to stop moving the electronic device.

Specifically, the preset threshold can be determined based on the preset second difference range and the preset third difference range. For example, if the preset second difference range is [0, 3] and the preset third difference range is [0, 4], the preset threshold may be 5.

In some embodiments, before block 201, the photographing method may further include:
determining, by the electronic device, a type of the photographic scene;
in response to the type being a first type, performing, by the electronic device, the coarse-grained identification of the objects in the photographic scene, and acquiring the objects in the photographic scene;
in response to the type being a second type, performing, by the electronic device, fine-grained identification of the objects in the photographic scene, and acquiring the objects in the photographic scene;
acquiring, by the electronic device, a second template image corresponding to the photographic scene;
acquiring, by the electronic device, third state information of the each type of object in the photographic scene, and acquiring, by the electronic device, fourth state information of the each type of object in the second template image; and
generating and outputting, by the electronic device, in response to the third state information not matching with the fourth state information, a prompt information for prompting adjustment of posture of the objects in the photographic scene, to make the real-time state information of the each type of object in the photographic scene match with the fourth state information.

The electronic device can divide types of photographic scenes into the first type and the second type in advance, where a type of a photographic scene with objects related to urban architecture, seascape, landscape and other landscapes can be the first type, and a type of a photographic scene with objects related to ornaments such as desks and computers on the desks, a glove compartment and articles in the glove compartment can be the second type. Then, when there are objects such as urban buildings, landscapes, etc. in the photographic scene, the electronic device can determine that the type of the photographic scene belongs to the first type, and then the electronic device can execute block 201.

When there are objects such as a glove compartment and articles in the glove compartment in a photographic scene, the electronic device can determine that the type of the photographic scene belongs to the second type, and then the electronic device can perform fine-grained identification on the photographic scene to acquire multiple objects in the photographic scene. Specifically, during performing fine-grained recognition on the objects in the photographic scene, different instances of an object are considered. For example, many persons in the photographic scene are many different objects.

Subsequently, the electronic device may acquire the second template image corresponding to the photographic scene. For example, the electronic device can determine the second template image according to objects such as the glove compartment and articles in the glove compartment in the photographic scene. Specifically, the second template image is an image with reasonable composition, and the second template image can include the glove compartment and the articles in the glove compartment.

Next, the electronic device can make the second template image appear translucent and overlay on the preview image of the photographic scene. On this basis, the electronic device can acquire a position of the each type of object in the photographic scene and a position of the each type of object in the second template image. When a position of an object in the photographic scene does not match a position of the object in the second template image, the electronic device can determine that the third state information corresponding to the object does not match with the fourth state information corresponding to the object, and then the electronic device can generate and output prompt information for prompting adjustment of posture of the object in the photographic scene until the real-time state information of the each type of object in the photographic scene matches with the fourth state information corresponding to the each type of object, so that an arrangement position of the each type of object in the actual scene conforms to composition aesthetics.

For example, if the object is required to be moved horizontally to the left so that the position of the object in the photographic scene matches with the position of the object in the second template image, the prompt information may be: please move the object horizontally to the left. Then, the user can move the object horizontally to the left, so that the position of the object in the photographic scene matches with the position of the object in the second template.

In the embodiment of the present disclosure, when the position of an object in the photographic scene is the same as the position of the object in the second template image, or the position of an object in the photographic scene is within a preset circular range centered on the position of the object in the second template image, it can be determined that the position of the object in the photographic scene matches with the position of the object in the second template image. Alternatively, when the center-of-gravity coordinate of an object in the preview image of the photographic scene is the same as the center-of-gravity coordinate of the object in the second template image, or the center-of-gravity coordinate of an object in the preview image of the photographic scene lies in a circular area with the center-of-gravity coordinate of the object in the second template image and a preset radius, it can be determined that the position of the object in the photographic scene matches with the position of the object in the second template image. A size of the preview image of the photographic scene is the same as that of the second template image.

Specifically, the preset circle range and the preset value can be set according to an actual situation, and are not specifically limited herein. A center-of-gravity coordinate of an object in the preview image of the photographic scene and a center-of-gravity coordinate of the object in the second template image are in the same plane rectangular coordinate system. For example, the plane rectangular coordinate system can be based on the coincidence of the preview image and the second template image, with a lower left corner of the preview image or the second template image as an origin, the direction of the lower left corner pointing to the lower right corner being the X axis direction, and the direction of the lower left corner pointing to the upper left corner being the Y axis direction.

In some embodiments, when it is required to acquire multiple objects in the photographic scene, the electronic device may also acquire a preview image of the photographic scene, and perform image instance segmentation processing on the preview image to acquire the multiple objects in the preview image, that is, the multiple objects in the photographic scene.

In some embodiments, block 202 may include:
acquiring, by the electronic device, a preview image of the photographic scene;
acquiring, by the electronic device, multiple template images;
determining, by the electronic device, a quantity of same types of objects in the preview image and each of the multiple template images; and
determining, by the electronic device, one of the multiple template images which corresponds to the largest quantity of same types of objects as the first template image corresponding to the photographic scene.

For example, it is assumed that objects in the preview image are "person", "mountain" and "water"; there are 3 template images preset in the electronic device, i.e., template images M2, M3 and M4, specifically, the objects in the template image M2 are "monkey" and "woods", the objects in the template image M3 are "sea", "beach" and "person", and the objects in the template image M4 are "person", "mountain" and "water"; and it can be determined that a quantity of the same objects in the preview image and the template image M2 is 0; A quantity of the same objects in preview image and template image M3 is 1; a quantity of the same objects in the preview image and the template image M4 is 3, therefore, the electronic device can determine the template image M3 as the first template image corresponding to the photographic scene.

In some embodiments, when there are multiple corresponding template images of the maximum quantity, the electronic device may determine historical usage times of each of the corresponding template images of the maximum quantity; and the electronic device can determine the template image with the most historical usage time as the first template image. For example, assuming that the electronic device is preset with three template images, i.e., template images M5, M6 and M7. Specifically, a quantity of the same objects in the preview image and the template image M5 is 3, a quantity of the same objects in the preview image and the template image M6 is 3, and a quantity of the same objects in the preview image and the template image M7 is 2; the historical usage time of the template image M5 is 5, and the historical usage time of the template image M6 is 10. Then, it can be determined first that a quantity of template images M5 and M6 is the largest, and then the electronic device can determine the template image M6 as the first template image corresponding to the photographed, scene the template image M6 has the largest history usage time.

In some embodiments, when it is required to acquire objects in the photographic scene, the electronic device may also acquire a preview image of the photographic scene, and perform image semantic segmentation processing on the preview image to acquire the objects in the preview image, that is, the objects in the photographic scene.

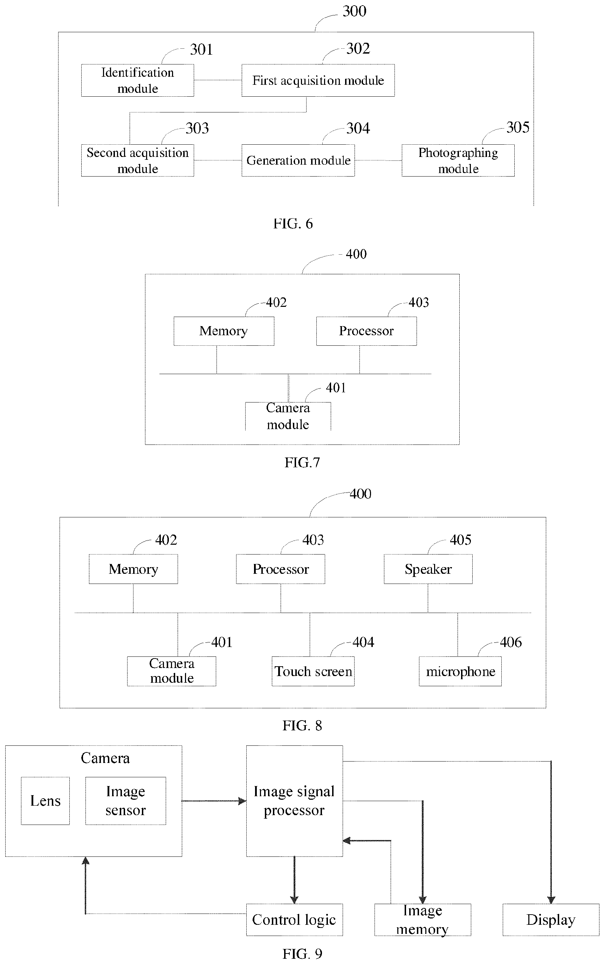

Referring to FIG. 6, FIG. 6 illustrates a schematic structural view of a photographing apparatus according to an embodiment of the present disclosure. The photographing apparatus 300 includes: an identification module 301, a first acquisition module 302, a second acquisition module 303, a generation module 304 and a photographing module 305.

The identification module 301 is used to perform coarse-grained identification of objects in a photographic scene, to acquire objects in the photographic scene.

The first acquisition module 302 is used to acquire a first template image corresponding to the photographic scene.

The second acquisition module 303 is used to acquire first state information of each type of object of the objects in the photographic scene, and acquire second state information of the each type of object in the first template image.

The generation module 304 is used to generate and output, in response to the first state information not matching with the second state information, first prompt information for prompting adjustment of posture of the electronic device.

The photographing module 305 is used to photograph, in response to real-time state information of each type of object of the objects in the photographic scene matching with the second state information of the each type of object, the photographic scene, and acquire a first image.

In some embodiment, the first state information is a first proportion, and the second state information is a second proportion. The second acquisition module 303 may be used to: acquire a preview image of the photographic scene; acquire the first proportion of an area of the each type of object to an area of the preview image; acquire the second proportion of an area of the each type of object to an area of the first template image. The generation module 304 may be used to: in response to a difference between the first proportion and the second proportion being not within a predetermined first difference range, generate and output the first prompt information for prompting adjustment of posture of the electronic device. The photographing module 305 may be used to: in response to a difference between a proportion of an area of the each type of object to an area of a real-time preview image and the second proportion being within the predetermined first difference range, photograph the photographic scene and acquire the first image.

In some embodiments, the generation module 304 may be used to: determine a target object from the objects, where a type of the target object corresponds to the difference between the first proportion and the second proportion being not within the predetermined first difference range; determine, in response to the first proportion corresponding to the target object being greater than the second proportion corresponding to the target object, a direction of decreasing the first proportion corresponding to the target object as a first movement direction of the electronic device; determine, in response to the first proportion corresponding to the target object being smaller than the second proportion corresponding to the target object, a direction of increasing the first proportion corresponding to the target object as a first movement direction of the electronic device; and generate and output, based on the first movement direction, the first prompt information for prompting adjustment of posture of the electronic device.

In some embodiments, the second acquisition module 303 may be further used to: in response to the difference between the first proportion and the second proportion being within the predetermined first difference range, acquire, a first center-of-gravity coordinate of each type of object of the objects in the preview image and acquire a second center-of-gravity coordinate of the each type of object in the first template image, where the first center-of-gravity coordinate includes a first horizontal coordinate and a first vertical coordinate, and the second center-of-gravity coordinate includes a second horizontal coordinate and a second vertical coordinate; and the generation module 304 may be further used to: in response to one of a difference between the first horizontal coordinate and the second horizontal coordinate being not within a predetermined second difference range and a difference between the first vertical coordinate and the second vertical coordinate is not within a predetermined third difference range, second prompt information for prompting adjustment of posture of the electronic device; and photograph, in response to a difference between a horizontal coordinate of a center-of-gravity coordinate of each type of object of the objects in the real-time preview image and the second horizontal coordinate being within the predetermined second difference range and a difference between a vertical coordinate of the center-of-gravity coordinate of the each type of object in the real-time preview image and the second vertical coordinate being within the predetermined third difference range, generate and output the photographic scene and acquire a second image.

In some embodiments, the generation module 304 may be further used to: display a circular area corresponding to each type of object of the objects, with the center-of-gravity coordinate of the each type of object in the first template image as a center of circle and a predetermined threshold as a radius, where the predetermined threshold is determined based on the predetermined second difference range and the predetermined third difference range; determine a second movement direction of the electronic device based on the circular area; and generate and output the second prompt information for prompting adjustment of posture of the electronic device based on the second direction of movement.

In some embodiments, the identification module 301 may be further used to: determine a type of the photographic scene; and in response to the type being a first type, perform the coarse-grained identification of the objects in the photographic scene, and acquire the objects in the photographic scene.

In some embodiments, the identification module 301 may be used to: in response to the type being a second type, perform a fine-grained identification of the objects in the photographic scene, and acquire the objects in the photographic scene; acquire a second template image corresponding to the photographic scene; acquire third state information of the each type of object in the photographic scene, and acquire fourth state information of the each type of object in the second template image; and generate and output, in response to the third state information not matching with the fourth state information, a prompt information for prompting adjustment of posture of the each type of object in the photographic scene, to make the real-time state information of the each type of object in the photographic scene match with the fourth state information.

In some embodiments, the first acquisition module 302 may be used to: acquire a preview image of the photographic scene; acquire multiple template images; determine a quantity of same types of objects in the preview image and each of the multiple template images; and determine one of the multiple template images which corresponds to the largest quantity of same types of objects as the first template image corresponding to the photographic scene.

A non-transitory computer-readable storage medium is provided according to an embodiment of the present disclosure. A computer program is stored in the storage medium, and the computer program is configured to cause, when being executed by a computer, the computer to implement a process of the photographing method according to an embodiment of the present disclosure.

An electronic device is further provided according to an embodiment of the present disclosure, which includes a processor and a memory, where the memory is stored with a computer program, and the processor is configured to, by calling the computer program stored in the memory, implement a process of the photographing method according to an embodiment of the present disclosure.

For example, the above-mentioned electronic device may be a mobile terminal such as a tablet computer or a smart phone. Please refer to FIG. 7, and FIG. 7 illustrates a first schematic structural view of the electronic device according to the embodiment of the present disclosure.

The electronic device 400 may include components such as a camera module 401, a memory 402, a processor 403. It can be understood by the skilled in the art that the electronic device structure shown in FIG. 7 does not constitute a limitation on the electronic device, and may include more or less components than those shown, or combine some components, or different component arrangements.

The camera module 401 may include a lens, an image sensor and an image signal processor, where the lens is used to collect external light source signals and provide the external light source signals to the image sensor, and the image sensor senses the light source signals from the lens, converts light source signals into digitized raw images, i.e., RAW images, and provides the RAW images to the image signal processor for processing. The image processor can perform format conversion, noise reduction and other processing on the RAW images to acquire YUV images. Specifically, RAW is an unprocessed and uncompressed format, which can be vividly called "digital negative". The YUV is a color coding method, in which Y represents brightness, U represents chromaticity, and V represents density. Human eyes can intuitively feel natural features contained in YUV images.

The memory 402 can be used to store an application program and data. The application program stored in the memory 402 contains executable codes. The application program can be composed of various functional modules. The processor 403 executes various functional applications and data processing by running the application program stored in the memory 402.

The processor 403 is a control center of the electronic device, connecting various parts of the entire electronic device by various interfaces and lines, executing various functions of the electronic device and processing data by running or executing the application program stored in the memory 402 and calling the data stored in the memory 402, so as to monitor the electronic device as a whole.

In the embodiment, the processor 403 of the electronic device will load the executable codes corresponding to processes of one or more application programs into the memory 402 according to the following instructions, and the processor 403 will run the application programs stored in the memory 402 to implement:
performing coarse-grained identification of objects in a photographic scene, and acquiring the objects in the photographic scene, each of the objects corresponding to a type;
acquiring a first template image corresponding to the photographic scene;
acquiring first state information of each type of object of the objects in the photographic scene, and acquiring second state information of the each type of object in the first template image;
generating and outputting, in response to the first state information not matching with the second state information, first prompt information for prompting adjustment of posture of the electronic device; and
photographing the photographic scene in response to real-time state information of the each type of object in the photographic scene matching with the second state information of each type of object of the objects, and acquiring a first image.

Referring to FIG. 8, the electronic device 400 may include a camera module 401, a memory 402, a processor 403, a touch screen 404, a speaker 405, a microphone 406 and other components.

The camera module 401 may include an image processing circuit, which may be implemented by hardware and/or software components, and may include various processing units for defining an Image Signal Processing pipeline. The image processing circuit can at least include a camera, an Image Signal Processor (ISP), a control logic, an image memory and a display. Specifically, the camera can at least include one or more lenses and an image sensor. The sensor may include an array of color filters (such as Bayer filters). The image sensor can acquire the light intensity and wavelength information captured by each imaging pixel of the image sensor, and provide a set of original image data that can be processed by the image signal processor.

The image signal processor can process original image data pixel by pixel in various formats. For example, each image pixel may have a bit depth of 8, 10, 12 or 14 bits, and the image signal processor may perform one or more image processing operation on the original image data and collect statistical information about the image data. Among them, the image processing operation can be performed with the same or different bit depth accuracy. The original image data can be stored in the image memory after being processed by the image signal processor. The image processor can also receive image data from the image memory.

The image memory may be a part of a memory device, a storage device, or an independent dedicated memory in an electronic device, and may include a DMA (Direct Memory Access) feature.

When receiving the image data from the image memory, the image signal processor may perform one or more image processing operation, such as time domain filtering. The processed image data can be sent to the image memory for further processing before being displayed. The signal processor can also receive the processed data from the image memory and process the processed data in the original domain and RGB and YCbCr color spaces. The processed image data can be output to a display for users to watch and/or further processed by a graphics engine or a Graphics Processing Unit (GPU). In addition, the output of the image signal processor can also be sent to the image memory, and the display can read the image data from the image memory. In one embodiment, the image memory may be configured to implement one or more frame buffers.

Statistical data determined by the image signal processor can be sent to the control logic. For example, the statistical data may include statistical information of image sensors such as auto exposure, auto white balance, auto focus, flicker detection, black level compensation, lens shadow correction, etc.

The control logic may include a processor and/or microcontroller that executes one or more routines (such as firmware(s)). The one or more routines can determine a control parameter of the camera and a control parameter of the ISP based on the received statistical data. For example, the control parameter of the camera may include camera flash control parameters, lens control parameters (such as focal length for focusing or zooming), or a combination of these parameters. The control parameter of the ISP may include gain level and color correction matrix used for automatic white balance and color adjustment (for example, during RGB processing), etc.

Please refer to FIG. 9, and FIG. 9 illustrates a schematic structural view of an image processing circuit in the embodiment. As shown in FIG. 9, for convenience of explanation, only various aspects of image processing technology related to the embodiment of the present disclosure are shown.

For example, the image processing circuit may include: a camera, an image signal processor, a control logic, an image memory, and a display. Specifically, the camera can include one or more lenses and an image sensor. In some embodiments, the camera can be either a telephoto camera or a wide-angle camera.

A first image collected by the camera is transmitted to the image signal processor for processing. After processing the first image, the signal processor can send statistical data of the first image (such as brightness of the image, a contrast value of the image, color of the image, etc.) to the control logic. The logic controller can determine control parameters of the camera based on the statistical data, so that the camera can perform autofocus, automatic exposure and other operation based on the control parameters. The first image can be stored in the image memory after being processed by the image signal processor. The image processor can also read the image stored in the image memory for processing. In addition, the first image can be directly sent to the display for display after being processed by the image signal processor. The display can also read the image in the image memory for displaying.

In addition, not shown in the FIG. 9, the electronic device may also include a Central Processing Unit (CPU) and a power supply module. And is connected with the CPU logic controller, the image signal processor, the image memory and the display, and the CPU is used for realizing global control. The power supply module is used to supply power to each module.

The application program stored in the memory 402 contains executable codes. Application programs can be composed of various functional modules. The processor 403 executes various functional applications and data processing by running application programs stored in the memory 402.

The processor 403 is a control center of the electronic device, connecting various parts of the entire electronic device by various interfaces and lines, executing various functions of the electronic device and processing data by running or executing the application program stored in the memory 402 and calling the data stored in the memory 402, so as to monitor the electronic device as a whole.

The touch display screen 404 may be used to receive a touch control operation of the electronic device by a user. The speaker 405 can play sound signals. The microphone 406 can be used to pick up sound signals.

In the embodiment, the processor 403 in the electronic device will load the executable codes corresponding to a process/processes of one or more application programs into the memory 402 according to the following instructions, and the processor 403 will run the application programs stored in the memory 402 to:
perform coarse-grained identification of objects in a photographic scene, and acquire the objects in the photographic scene;
acquire a first template image corresponding to the photographic scene;
acquire first state information of each type of object of the objects in the photographic scene, and acquire second state information of the each type of object in the first template image;
generate and output, in response to the first state information not matching with the second state information, first prompt information for prompting adjustment of posture of the electronic device; and
photograph, in response to real-time state information of each type of object of the objects in the photographic scene matching with the second state information of each type of object of the objects, the photographic scene, and acquire a first image.

In an embodiment, the first state information is a first proportion, and the second state information is a second proportion; when performing the for the each type of objects, acquiring first state information of the each type of object in the photographic scene, the processor 403 may be used to: acquire a preview image of the photographic scene; and acquire the first proportion of an area of the each type of object to an area of the preview image; when performing the for the each type of object, acquiring second state information of the each type of object in the first template image, the processor 403 may be used to: acquire the second proportion of an area of the each type of object to an area of the first template image; when performing the generating and outputting, in response to the first state information not matching with the second state information, first prompt information for prompting adjustment of posture of the electronic device, the processor 403 may be used to in response to a difference between the first proportion and the second proportion being not within a predetermined first difference range, generate and output the first prompt information for prompting adjustment of posture of the electronic device; and when performing the generating and outputting, in response to the first state information not matching with the second state information, first prompt information for prompting adjustment of posture of the electronic device, the processor 403 may be used to: in response to a difference between a proportion of an area of the each type of object to an area of a real-time preview image and the second proportion being within the predetermined first difference range, photograph the photographic scene and acquire the first image.

In an embodiment, when performing the generating and outputting first prompt information for prompting adjustment of posture of the electronic device, the processor 403 may be used to determine a target object from the objects, where a difference between the first proportion corresponding to the target object and the second proportion is not within the predetermined first difference range; determine, in response to the first proportion corresponding to the target object being greater than the second proportion corresponding to the target object, a direction of decreasing the first proportion corresponding to the target object as a first movement direction of the electronic device; determine, in response to the first proportion corresponding to the target object being smaller than the second proportion corresponding to the target object, a direction of increasing the first proportion corresponding to the target object as the first movement direction of the electronic device; and generate and output, based on the first movement direction, the first prompt information for prompting adjustment of posture of the electronic device.

In an embodiment, the processor 403 may be further used to: in response to the difference between the first proportion and the second proportion being within the predetermined first difference range, acquire, a first center-of-gravity coordinate of the each type of object in the preview image and acquire a second center-of-gravity coordinate of the each type of object in the first template image, where the first center-of-gravity coordinate includes a first horizontal coordinate and a first vertical coordinate, and the second center-of-gravity coordinate includes a second horizontal coordinate and a second vertical coordinate; generate and output, in response to one of a difference between the first horizontal coordinate and the second horizontal coordinate being not within a predetermined second difference range and a difference between the first vertical coordinate and the second vertical coordinate being not within a predetermined third difference range, second prompt information for prompting adjustment of posture of the electronic device; and photograph, in response to a difference between a horizontal coordinate of a center-of-gravity coordinate of the each type of object in the real-time preview image and the second horizontal coordinate being within the predetermined second difference range and a difference between a vertical coordinate of the center-of-gravity coordinate of the each type of object in the real-time preview image and the second vertical coordinate being within the predetermined third difference range, the photographic scene, and acquire a second image.

In an embodiment, when performing the generating and outputting second prompt information for prompting adjustment of posture of the electronic device, the processor 403 may be further used to: display a circular area corresponding to the each type of object, with the center-of-gravity coordinate of the each type of object in the first template image as a center of circle and a predetermined threshold as a radius, where the predetermined threshold is determined based on the predetermined second difference range and the predetermined third difference range; determine a second movement direction of the electronic device based on the circular area; and generate and output the second prompt information for prompting adjustment of posture of the electronic device based on the second direction of movement.

In an embodiment, before the acquiring objects in a photographic scene by performing coarse-grained identification of objects in the photographic scene, the processor 403 may be further used to: determine a type of the photographic scene; and in response to the type being a first type, perform the coarse-grained identification of the objects in the photographic scene, and acquire the objects in the photographic scene.

In an embodiment, the processor 403 may be further used to: in response to the type being a second type, perform fine-grained identification of the objects in the photographic scene, and acquire the objects in the photographic scene; acquire a second template image corresponding to the photographic scene; acquire third state information of the each type of object in the photographic scene, and acquire fourth state information of the each type of object in the second template image; and generate and output, in response to the third state information not matching with the fourth state information, prompt information for prompting adjustment of posture of the each type of object in the photographic scene, to make the real-time state information of the each type of object in the photographic scene match with the fourth state information.

In an embodiment, when performing the acquire a first template image corresponding to the photographic scene, the processor 403 may be used to: acquire a preview image of the photographic scene; acquire multiple template images; determine a quantity of same types of objects in the preview image and each of the multiple template images; and determine one of the multiple template images which corresponds to the largest quantity of same types of objects as the first template image corresponding to the photographic scene

In the above embodiments, the description of each of the embodiments has its own emphasis. When a part of a certain embodiment is not described in detail, please refer to the above detailed description of the photographing method, which is not repeated herein.

The photographing apparatus provided by the embodiment of the present disclosure belongs to the same concept as the photographing method in the above embodiment, and any method provided in the embodiments of the photographing method can be run on the photographing apparatus, and the specific implementation process is detailed in the embodiment of the photographing method, which is not described herein.

It should be noted that, for the photographing method described in the embodiment of the present disclosure, the skilled in the art can understand that all or part of the process of realizing the photographing method described in the embodiment of the present disclosure can be completed by controlling related hardware through a computer program, which can be stored in a computer-readable storage medium, such as a memory, and executed by at least one processor, and the execution process can include the process of the photographing method described in the embodiment of the present disclosure. The storage medium can be a magnetic disk, an optical disk, a Read Only Memory (ROM), a Random Access Memory (RAM), etc.

For the photographing apparatus of the embodiments of the present disclosure, its functional modules may be integrated in one processing chip, or each module may exist physically alone, or two or more modules may be integrated in one module. The above-mentioned integrated modules can be realized in the form of hardware or software functional modules. If the integrated module is implemented in the form of a software functional module and sold or used as an independent product, it can also be stored in a computer-readable storage medium, such as a read-only memory, a magnetic disk or an optical disk.

The photographing method and apparatus, a storage medium and an electronic device provided by the above embodiments of the present disclosure are introduced in detail, and principles and embodiments of the present disclosure are explained by specific examples. However, the explanations of the above embodiments are merely used to help understand the methods and core ideas of the present disclosure. Also, for the skilled in the art, according to the ideas of the present disclosure, there will be changes in the specific embodiments and an application scope. To sum up, the contents of this specification should not be construed as a restriction on the present disclosure.

## Claims

1. A photographing method, comprising:
acquiring objects in a photographic scene by performing coarse-grained identification of the objects in the photographic scene, each of the objects corresponding to a type;
acquiring a first template image corresponding to the photographic scene;
acquiring first state information of each type of object in the photographic scene, and acquiring second state information of the each type of object in the first template image;
generating and outputting, in response to the first state information not matching with the second state information, first prompt information for prompting adjustment of posture of an electronic device; and
photographing the photographic scene in response to real-time state information of the each type of object in the photographic scene matching with the second state information of the each type of object, and acquiring a first image.

2. The photographing method according to claim 1, wherein the first state information is a first proportion, and the second state information is a second proportion;
wherein the acquiring first state information of each type of object in the photographic scene comprises:
acquiring a preview image of the photographic scene; and
acquiring the first proportion of an area of the each type of object to an area of the preview image;
wherein the acquiring second state information of the each type of object in the first template image comprises:
acquiring the second proportion of an area of the each type of object to an area of the first template image;
wherein the first state information not matching with the second state information comprises: a difference between the first proportion and the second proportion being not within a predetermined first difference range; and
wherein the real-time state information of the each type of object in the photographic scene matching with the second state information of the each type of object comprises: a difference between a proportion of an area of the each type of object to an area of a real-time preview image and the second proportion being within the predetermined first difference range.

3. The photographing method according to claim 2, wherein the generating and outputting first prompt information for prompting adjustment of posture of the electronic device specifically comprises:
determining a target object, wherein a type of the target object corresponds to the difference between the first proportion and the second proportion being not within the predetermined first difference range;
determining, in response to the first proportion corresponding to the target object being greater than the second proportion corresponding to the target object, a direction of decreasing the first proportion corresponding to the target object as a first movement direction of the electronic device;
determining, in response to the first proportion corresponding to the target object being smaller than the second proportion corresponding to the target object, a direction of increasing the first proportion corresponding to the target object as the first movement direction of the electronic device; and
generating and outputting, based on the first movement direction, the first prompt information for prompting adjustment of posture of the electronic device.

4. The photographing method according to claim 2, further comprising:
in response to the difference between the first proportion and the second proportion being within the predetermined first difference range, acquiring a first center-of-gravity coordinate of the each type of object and acquiring a second center-of-gravity coordinate of the each type of object in the first template image, wherein the first center-of-gravity coordinate comprises a first horizontal coordinate and a first vertical coordinate, and the second center-of-gravity coordinate comprises a second horizontal coordinate and a second vertical coordinate;
generating and outputting, in response to one of a difference between the first horizontal coordinate and the second horizontal coordinate being not within a predetermined second difference range and a difference between the first vertical coordinate and the second vertical coordinate being not within a predetermined third difference range, second prompt information for prompting adjustment of posture of the electronic device; and
photographing the photographic scene, in response to a difference between a horizontal coordinate of a center-of-gravity coordinate of the each type of object in the real-time preview image and the second horizontal coordinate being within the predetermined second difference range and a difference between a vertical coordinate of the center-of-gravity coordinate of the each type of object in the real-time preview image and the second vertical coordinate being within the predetermined third difference range, and acquiring a second image.

5. The photographing method according to claim 4, wherein the generating and outputting second prompt information for prompting adjustment of posture of the electronic device comprises:
displaying a circular area corresponding to the each type of object, with the center-of-gravity coordinate of the each type of object in the first template image as a center of circle and a predetermined threshold as a radius, wherein the predetermined threshold is determined according to the predetermined second difference range and the predetermined third difference range;
determining, based on the circular area, a second movement direction of the electronic device; and
generating and outputting, based on the second movement direction, the second prompt information for prompting adjustment of posture of the electronic device.

6. The photographing method according to claim 1, further comprising:
before the acquiring objects in a photographic scene by performing coarse-grained identification of the objects in the photographic scene,
determining a type of the photographic scene; and
performing, in response to the type being a first type, the coarse-grained identification of the objects in the photographic scene, and acquiring the objects in the photographic scene.

7. The photographing method according to claim 6, further comprising:
performing, in response to the type being a second type, fine-grained identification of the objects in the photographic scene, and acquiring the objects in the photographic scene;
acquiring a second template image corresponding to the photographic scene;
acquiring third state information of each type of object in the photographic scene, and acquiring fourth state information of the each type of object in the second template image; and
generating and outputting, in response to the third state information not matching with the fourth state information, prompt information for prompting adjustment of posture of the objects in the photographic scene, to make the real-time state information of the each type of object in the photographic scene match with the fourth state information.

8. The photographing method according to claim 1, wherein the acquiring a first template image corresponding to the photographic scene comprises:
acquiring a preview image of the photographic scene;
acquiring a plurality of template images;
determining a quantity of same types of objects in the preview image and each of the plurality of template images; and
determining one of the plurality of template images which corresponds to the largest quantity of same types of objects as the first template image corresponding to the photographic scene.

9. A photographing apparatus, comprising:
an identification module, configured to acquire objects in a photographic scene by performing coarse-grained identification of the objects in the photographic scene, each of the objects corresponding to a type;
a first acquiring module, configured to acquire a first template image corresponding to the photographic scene;
a second acquiring module, configured to, first state information of each type of object in the photographic scene, and acquire second state information of the each type of object in the first template image;
a generation module, configured to generate and output, in response to the first state information not matching with the second state information, first prompt information for prompting adjustment of posture of an electronic device; and
a photographing module, configured to photograph the photographic scene in response to real-time state information of the each type of object in the photographic scene matching with the second state information of the each type of object, and acquire a first image.

10. The photographing apparatus according to claim 9, wherein the first state information is a first proportion, and the second state information is a second proportion;
wherein the second acquiring module specifically is configured to:
acquire a preview image of the photographic scene;
acquire the first proportion of an area of the each type of object to an area of the preview image;
acquire the second proportion of an area of the each type of object to an area of the first template image;
wherein the generation module is specifically configured to:
generate and output, in response to a difference between the first proportion and the second proportion being not within a predetermined first difference range, the first prompt information for prompting adjustment of posture of the electronic device; and
wherein the photographing module is specifically configured to:
photograph the photographic scene, in response to a difference between a proportion of an area of the each type of object to an area of a real-time preview image and the second proportion is within the predetermined first difference range, and acquire the first image.

11. The photographing method according to claim 10, wherein the generation module is specifically configured to:
determine a target object, wherein a type of the target object corresponds to the difference between the first proportion and the second proportion being not within the predetermined first difference range;
determine, in response to the first proportion corresponding to the target object being greater than the second proportion corresponding to the target object, a direction of decreasing the first proportion corresponding to the target object as a first movement direction of the electronic device;
determine, in response to the first proportion corresponding to the target object being smaller than the second proportion corresponding to the target object, a direction of increasing the first proportion corresponding to the target object as the first movement direction of the electronic device; and
generate and output, based on the first movement direction, the first prompt information for prompting adjustment of posture of the electronic device.

12. A storage medium having a computer program stored therein, and the computer program is configured to cause, when being executed by a computer, the computer to implement the photographing method according to claim 1.

13. An electronic device, comprising a processor and a memory, wherein the memory is stored with a computer program, and the processor is configured to, by calling the computer program stored in the memory, implement:
performing coarse-grained identification of objects in a photographic scene, and acquiring the objects in the photographic scene, each of the objects corresponding to a type;
acquiring a first template image corresponding to the photographic scene;
acquiring first state information of each type of object in the photographic scene, and acquire second state information of the each type of object in the first template image;
generating and outputting, in response to the first state information not matching with the second state information, first prompt information for prompting adjustment of posture of the electronic device; and
photographing the photographic scene in response to real-time state information of the each type of object in the photographic scene matching with the second state information of the each type of object, and acquire a first image.

14. The electronic device according to claim 13, wherein the first state information is a first proportion, and the second state information is a second proportion;
wherein the processor is specifically configured to:
acquire a preview image of the photographic scene;
acquire the first proportion of an area of the each type of object to an area of the preview image;
acquire the second proportion of an area of the each type of object to an area of the first template image;
generate and output, in response to a difference between the first proportion and the second proportion being not within a predetermined first difference range, the first prompt information for prompting adjustment of posture of the electronic device; and
photograph the photographic scene, in response to a difference between a proportion of an area of the each type of object to an area of a real-time preview image and the second proportion being within the predetermined first difference range, and acquire the first image.

15. The electronic device according to claim 14, wherein the processor is specifically configured to:
determine a target object, wherein a type of the target object corresponds to the difference between the first proportion and the second proportion being not within the predetermined first difference range;
determine, in response to the first proportion corresponding to the target object being greater than the second proportion corresponding to the target object, a direction of decreasing the first proportion corresponding to the target object as a first movement direction of the electronic device;
determine, in response to the first proportion corresponding to the target object being smaller than the second proportion corresponding to the target object, a direction of increasing the first proportion corresponding to the target object as the first movement direction of the electronic device; and
generate and output, based on the first movement direction, the first prompt information for prompting adjustment of posture of the electronic device.

16. The electronic device according to claim 14, wherein the processor is configured to:
in response to the difference between the first proportion and the second proportion being within the predetermined first difference range, acquire a first center-of-gravity coordinate of the each type of object in the preview image and acquire a second center-of-gravity coordinate of the each type of object in the first template image, wherein the first center-of-gravity coordinate comprises a first horizontal coordinate and a first vertical coordinate, and the second center-of-gravity coordinate comprises a second horizontal coordinate and a second vertical coordinate;
generate and output, in response to one of a difference between the first horizontal coordinate and the second horizontal coordinate being not within a predetermined second difference range and a difference between the first vertical coordinate and the second vertical coordinate being not within a predetermined third difference range, second prompt information for prompting adjustment of posture of the electronic device; and
photograph the photographic scene, in response to a difference between a horizontal coordinate of a center-of-gravity coordinate of the each type of object in the real-time preview image and the second horizontal coordinate being within the predetermined second difference range and a difference between a vertical coordinate of the center-of-gravity coordinate of the each type of object in the real-time preview image and the second vertical coordinate being within the predetermined third difference range, and acquire a second image.

17. The electronic device according to claim 16, wherein the processor is specifically configured to:
display a circular area corresponding to the each type of object, with the center-of-gravity coordinate of the each type of object in the first template image as a center of circle and a predetermined threshold as a radius, wherein the predetermined threshold is determined based on the predetermined second difference range and the predetermined third difference range;
determine, based on the circular area, a second movement direction of the electronic device; and
generate and output, based on the second movement direction, the second prompt information for prompting adjustment of posture of the electronic device.

18. The photographing method according to claim 13, wherein the processor is configured to:
determine a type of the photographic scene; and
perform, in response to the type being a first type, the coarse-grained identification of the objects in the photographic scene, and acquire the objects in the photographic scene.

19. The photographing method according to claim 18, wherein the processor is configured to:
perform, in response to the type being a second type, fine-grained identification of the objects in the photographic scene, and acquire the objects in the photographic scene;
acquire a second template image corresponding to the photographic scene;
acquire third state information of the each type of object in the photographic scene, and acquire fourth state information of the each type of object in the second template image; and
generate and output, in response to the third state information not matching with the fourth state information, prompt information for prompting adjustment of posture of the objects in the photographic scene, to make the real-time state information of the each type of object in the photographic scene match with the fourth state information.

20. The photographing method according to claim 13, wherein the processor is configured to:
acquire a preview image of the photographic scene;
acquire a plurality of template images;
determine a quantity of same types of objects in the preview image and each of the plurality of template images; and
determine one of the plurality of template images which corresponds to the largest quantity of same types of objects as the first template image corresponding to the photographic scene.
